Europäisches Patentamt

European Patent Office

Office européen des brevets

(11) Veröffentlichungsnummer: **0 512 478 A1**

# EUROPÄISCHE PATENTANMELDUNG

(21) Anmeldenummer: **92107578.4**

(51) Int. Cl.⁵: **B65G 65/28**

(22) Anmeldetag: **05.05.92**

(30) Priorität: **07.05.91 DE 4114903**

(43) Veröffentlichungstag der Anmeldung:
**11.11.92 Patentblatt 92/46**

(84) Benannte Vertragsstaaten:
**DE ES FR GB IT**

(71) Anmelder: **KRUPP POLYSIUS AG**
**Graf-Galen-Strasse 17**
**W-4720 Beckum(DE)**

(72) Erfinder: **Golz, Hans-Joachim, Dipl.-Ing.**
**Von-Staden-Strasse 5**
**W-4730 Ahlen(DE)**
Erfinder: **Supp, Armin, Dr.-Ing.**
**9, Appelblaar Street**
**Roodepoort 1710(ZA)**

(74) Vertreter: **Tetzner, Volkmar, Dr.-Ing. Dr. jur.**
**Van-Gogh-Strasse 3**
**W-8000 München 71(DE)**

(54) **Vorrichtung zum Abräumen einer Schüttguthalde.**

(57) Diese Vorrichtung zum Abräumen und Abfördern des Schüttgutes (2) von einer Schüttguthalde (1) enthält eine verfahrbare Brücke (4), wenigstens eine entlang dieser Brücke (4) verfahrbare Kratzeinrichtung (6) sowie eine ebenfalls von der Brücke (4) getragene, in der Nähe des Haldenbodens (1c) angeordnete Schüttgut-Abfördereinrichtung (13), wobei im Bereich vor dieser Abfördereinrichtung (13) wenigstens ein bewegbarer Schüttgut-Aktivierungszahn (18',18'') von der Brücke (4) gehaltert wird. Große Steine bzw. Steinbrocken werden auf diese Weise ebenfalls zuverlässig mit dem übrigen Schüttgut (2) abgefördert.

FIG.4

EP 0 512 478 A1

Die Erfindung betrifft eine Vorrichtung zum Abräumen und Abfördern des Schüttgutes von einer Schüttguthalde, entsprechend dem Oberbegriff des Anspruches 1.

Vorrichtungen der vorausgesetzten Art sind aus der Praxis hinreichend bekannt. Bei Schüttguthalden kann es sich um reine Lagerhalden oder um Mischhalden handeln, in denen verschiedenartige Schüttgüter lose eingelagert (aufgeschüttet) sein können, wie z.B. Zementrohmaterialien, Erze oder dgl.

Bei diesen bekannten Ausführungen ist entlang einer gegen eine Böschungsseite (Stirnseite) der Schüttguthalde relativ verfahrbaren Brücke (Rückverladebrücke) eine Kratzeinrichtung verfahrbar und auslegerartig angeordnet, die mit dieser Böschungsseite in der Weise in Kratzeingriff gebracht werden kann, daß das eingelagerte Schüttgut aufgelockert werden und zu einer im Bereich des Haldenfußes ebenfalls von der Brücke getragenen Abfördereinrichtung herabrieseln kann; diese Abfördereinrichtung fördert dann im allgemeinen in Querrichtung das abgeräumte lose Schüttgut einer weiteren Fördereinrichtung zu. Als Kratzeinrichtungen können - im Vergleich zur Breite der abzuräumenden Böschungsseite - mehr oder weniger breite Kratzeinrichtungen bekannter Art Verwendung finden, beispielsweise balkenförmige Kratzeinrichtungen, Seilrechen, Kratzrechen oder dgl. Als Abfördereinrichtung an der Unterseite der Brücke können bevorzugt endlos umlaufende Kratzerketten Verwendurg finden, die mit einzelnen Kratzerschaufeln besetzt und über Laufrollen und durch Führungsschienen geführt sind.

Solange bei diesen bekannten Abräumvorrichtungen das in der Halde eingelagerte Schüttgut nur eine relativ feine oder mittlere Stückigkeit besitzt, d.h. keine größeren Steine enthält, kann das an der genannten Böschungsseite von der Schüttguthalde abgeräumte Schüttgut weitgehend problemlos von der Abfördereinrichtung der Brücke abgefördert werden. Enthält das in der Halde eingelagerte Schüttgut jedoch große Steine bzw. Steinbrocken, dann läßt sich das Schüttgut nicht mehr ohne weiteres mit der genannten Abfördereinrichtung rückverladen bzw. abfördern. Hier ist nämlich zu beachten, daß sich diese großen Steine und Steinbrocken in der Mehrzahl am Haldenfuß befinden und die Kratzerschaufeln der insbesondere als Kratzerkette ausgebildeten Abfördereinrichtung gegen diese am Haldenfuß und somit auf dem Haldenboden liegenden schweren Steine und Steinbrocken arbeiten würden, was zu starken Beschädigungen der Kratzerschaufeln, der Laufrollen, der Führungsschienen und auch der Kratzerkette führt, da vor allem die dicken Steine im Haldenfußbereich die Kratzerschaufeln nach oben drücken.

Der Erfindung liegt nun die Aufgabe zugrunde, eine Vorrichtung der im Oberbegriff des Anspruches 1 vorausgesetzten Art zu schaffen, bei der mit relativ einfachen konstruktiven Mitteln dafür gesorgt wird, daß im Schüttgut im Bereich des Haldenfußes vorhandene große Steine und Steinbrocken ebenfalls problemlos von der an der Brücke angeordneten Abfördereinrichtung aufgenommen und abgefördert werden können.

Diese Aufgabe wird erfindungsgemäß durch das kennzeichnende Merkmal des Anspruches 1 gelöst, wobei vorteilhafte Ausgestaltungen dieser Erfindung in den Unteransprüchen angegeben sind.

Bei dieser erfindungsgemäßen Ausführung soll wenigstens ein ebenfalls von der Brücke gehalterter, bewegbarer Schüttgut-Aktivierungszahn im Bereich vor der Abfördereinrichtung dafür sorgen, daß das durch die Kratzeinrichtung von der Böschungsseite abgekratzte und in den Schüttgut-Aufnahmebereich der Abfördereinrichtung zugeführte Schüttgut und die auf dem Haldenboden bzw. im Haldenfußbereich liegenden großen und schweren Steine bzw. Steinbrocken in der Weise aktiviert werden, daß diese großen Steine und Steinbrocken angehoben und von feineren Schüttgutanteilen gewissermaßen umspült werden, d.h. feineres und mittleres Schüttgutmaterial lagert sich um die dicken und schweren Steine und darunter an, so daß diese großen Steine und Steinbrocken, wenn sie einmal angehoben sind, in etwas höherem Niveau liegenbleiben, und dadurch von den Förderelementen der Abfördereinrichtung, also insbesondere von den Kratzerschaufeln einer Kratzerkette, verhältnismäßig einfach aufgenommen und abgefördert werden können. Auf diese Weise wird - im Gegensatz zu bekannten Ausführungen - zuverlässig vermieden, daß diese Förderelemente, insbesondere Kratzerschaufeln, von den am Haldenboden liegenden großen Steinen nach oben gedrückt werden und damit die genannten Beschädigungen hervorrufen können. In diesem Zusammenhang muß man sich vorstellen, daß die genannten großen Steine und Steinbrocken Kantenlängen von beispielsweise 550 x 300 x 200 mm und größer haben können. Durch das sinnvolle Anbringen wenigstens eines Aktivierungszahnes (bei schmaleren Kratzeinrichtungen), vorzugsweise mehrerer solcher Aktivierungszähne (bei breiteren Kratzeinrichtungen, insbesondere Kratzrechen) wird es erstmals zuverlässig möglich, auch die genannten großen und schweren Steine aus dem Bereich des Haldenfußes mit der Abfördereinrichtung problemlos abzufördern bzw. rückzuverladen.

In vorteilhafter Weise ist jeder Schüttgut-Aktivierungszahn vorzugsweise in Form eines im wesentlichen geraden, längeren Reißzahnes mit rundem oder polygonalem Querschnitt ausgebildet und frei nach unten hängend angeordnet. Dabei ragt das freie untere Ende in den Fußbereich der Schüttguthalde hinein, wobei es einen nur geringen lichten Abstand zum Haldenboden aufweist, d.h. der frei nach unten ragende Aktivierungszahn endet kurz vor dem Haldenboden. Auf diese Weise kann jeder Aktivierungszahn im wesentlichen alles auf dem Haldenboden lagernde Schüttgut aktivieren, wobei durch eine sinnvolle Bewegbarkeit jedes Schüttgut-Aktivierungszahnes auch ein gewisses Durchrühren des erfaßten Schüttgutanteiles bewirkt wird.

Die Erfindung sei nachfolgend anhand einiger in der Zeichnung veranschaulichter Ausführungsbeispiele näher erläutert. In dieser weitgehend schematisch gehaltenen Zeichnung zeigen:

Fig.1: eine Aufsicht auf die erfindungsgemäße Vorrichtung von der Böschungsseite der Schüttguthalde aus;

Fig.2: eine Querschnittsansicht der Vorrichtung, etwa entlang der Linie II-II in Fig.1;

Fig.3: einen im vergrößerten Maßstab dargestellten Teilausschnitt, etwa gemäß III in Fig.2;

Fig.4: eine ähnliche Detailansicht wie Fig.3, jedoch zur Erläuterung weiterer Ausführungsarten von Schüttgut-Aktivierungszähnen.

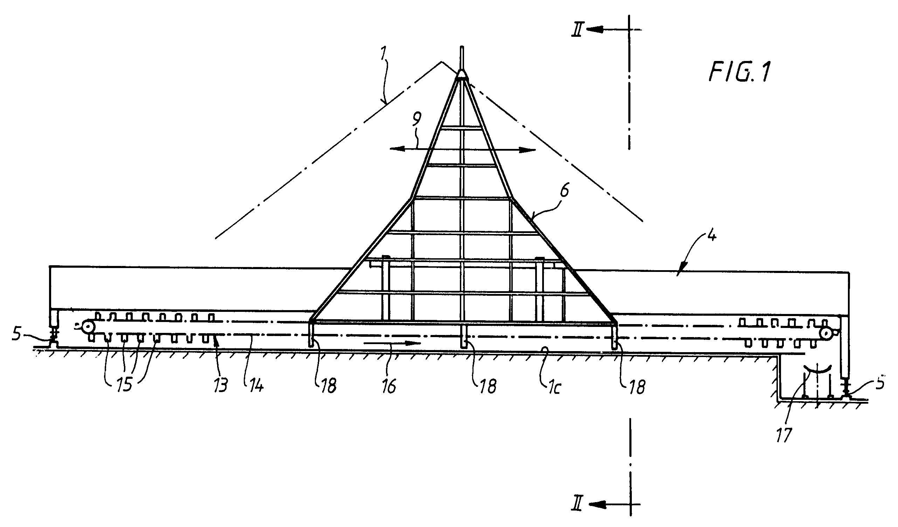

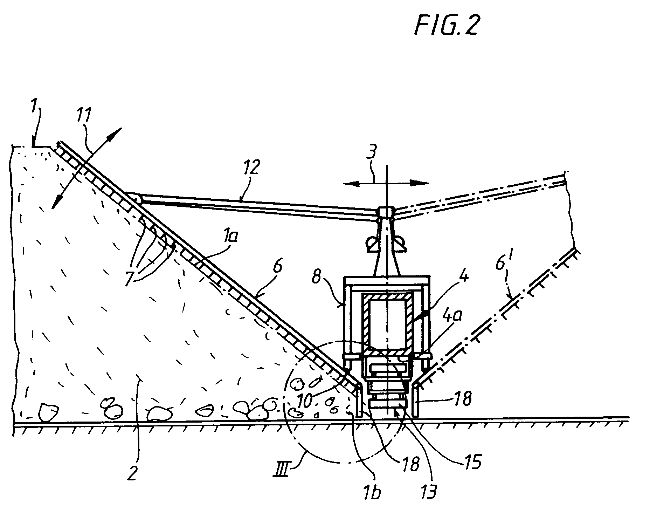

Der allgemeine Aufbau dieser Vorrichtung zum Abräumen und Abfördern des Schüttgutes von einer Schüttguthalde, nachfolgend nur "Abräumvorrichtung" genannt, sei zunächst anhand der Fig.1 und 2 erläutert.

In diesen Fig.1 und 2 ist eine durch strichpunktierte Linien umgrenzte Schüttguthalde 1 angedeutet. Das darin eingelagerte Schüttgut 2 soll mit Hilfe der Abräumvorrichtung von der stirnseitigen Böschungsseite 1a aus abgeräumt werden.

Diese Abräumvorrichtung enthält eine gegen die Böschungsseite 1a relativ verfahrbare (vgl. Doppelpfeil 3), als Rückverladebrücke dienende Brücke 4, die im vorliegenden Falle die Schüttguthalde 1 über ihre ganze Breite (Fig.1) überspannt und in üblicher Weise im Bereich der beiden Haldenlängsseiten auf Schienen 5 in Richtung des Doppelpfeiles 3 verfahrbar ist. Von dieser Brücke 4 wird eine auslegerartige Kratzeinrichtung 6 getragen, die in jeder geeigneten Weise ausgebildet sein kann, beispielsweise als balkenartige Kratzeinrichtung, als Seilrechen, Kratzrechen oder dgl.. Im vorliegenden Beispiel wird die Kratzeinrichtung vorzugsweise durch einen Kratzrechen 6 gebildet, der in an sich bekannter Weise, insbesondere in der aus Fig.1 ersichtlichen Form ausgebildet sein kann und an seiner Unterseite eine Vielzahl von Kratzzähnen 7 besitzt, mit denen der Kratzrechen 6 in die genannte Böschungsseite 1a kratzend eingreifen kann, um das Schüttgut dort zu lösen und abzuräumen, so daß es entlang dieser Böschungsseite 1a zum Haldenfuß 1b hin abrieseln kann.

Dieser Kratzrechen 6 kann in üblicher Weise über ein Fahrgestell 8 derart von der Brücke 4 getragen werden, daß er einerseits entlang der Brücke 4 in Richtung des Doppelpfeiles 9 (Fig.1) quer zur Böschungsseite 1a verfahren und andererseits um eine horizontale Achse 10 in Richtung des Doppelpfeiles 11 relativ gegen die Böschungsseite 1a bewegt bzw. geschwenkt werden kann, wodurch er in seiner Neigung gegenüber der abzukratzenden Böschungsseite 1a einstellbar am Brückenfahrgestell 8 gehaltert ist. Diese Neigungsverstellung kann beispielsweise mit Hilfe einer Seilwindeneinrichtung 12 bewerkstelligt werden.

Die Brücke 4 trägt ferner im Bereich des Haldenfußes 1b bzw. an ihrer Unterseite 4a eine Abfördereinrichtung, die bevorzugt in Form eines Kratzerförderers 13 ausgeführt ist, der bekannter Ausführung sein kann und dabei eine über Rollen und Führungsschienen geführte, in Längsrichtung der Brücke 4 umlaufende Kette 14 sowie an dieser Kette angebrachte Kratzerschaufeln 15 enthält, die das durch den Kratzrechen 6 von der Böschungsseite 1a abgekratzte und zugeführte Schüttgut 2 quer zur Böschungsseite 1a in Richtung des Pfeiles 16 zu einem auf der einen Längsseite der Halde angeordneten Bandförderer 17 fördert (vgl. Fig.1).

Von besonderer Bedeutung ist bei dieser Abräumvorrichtung, daß im Bereich vor der Abfördereinrichtung, also vor dem Kratzerförderer 13, d.h. auf seiner Schüttgut-Zuführseite, wenigstens ein ebenfalls von der Brücke 4 gehalterter, bewegbarer Schüttgut-Aktivierungszahn 18 vorgesehen ist. Da bei dem in der Zeichnung veranschaulichten Ausführungsbeispiel die Kratzeinrichtung durch einen im Vergleich zur Böschungsseite 1a der Schüttguthalde 1 relativ breiten Kratzrechen 6 gebildet ist, sind mehrere solche Aktivierungszähne 18 (in Fig.1 sind 3 Aktivierungszähne veranschaulicht) vorgesehen.

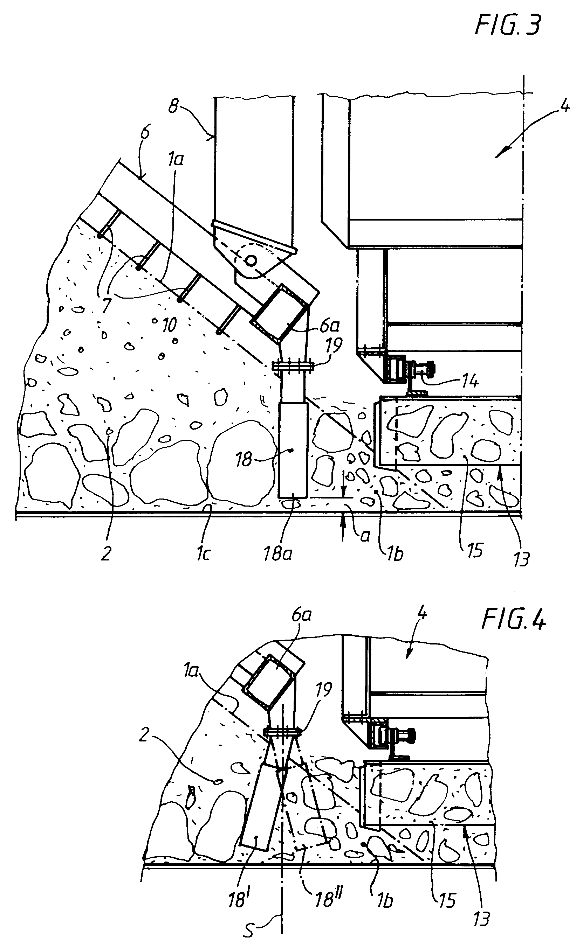

Anhand des in Fig.3 in größerem Maßstab veranschaulichten Ausschnittes der im Bereich des Haldenfußes befindlichen Teile der Abräumvorrichtung seien nachfolgend weitere Einzelheiten erläutert.

In dieser Fig.3 ist gut zu erkennen, daß jeder Schüttgut-Aktivierungszahn 18 in Form eines relativ geraden, - insbesondere im Vergleich zu den Kratzzähnen 7 des Kratzrechens 6 - besonders stabilen und längeren Reißzahnes ausgeführt ist, der jeden geeigneten Querschnitt, insbesondere einen runden, kreisförmigen, ovalen oder polygonalen Querschnitt aufweisen kann, der ein Durchfahren des im Haldenfuß 1b lagernden Schüttgutes 2 gestattet, dabei jedoch so stabil ausgebildet sein muß, daß er beim weiter oben geschilderten Aktivieren des losen Schüttgutes bzw. der großen Steine weder verbiegt noch abbricht. Diese Aktivierungszähne 18 sind dabei - wie Fig.3 zeigt - frei nach unten hängend angeordnet, wobei ihr freies unteres Ende 18a in den Haldenfußbereich 1b hineinragt und einen nur relativ geringen lichten Abstand a zum Haldenboden 1c aufweist. Im Ausführungsbeispiel gemäß Fig.1 bis 3 ragt jeder Aktivierungszahn 18 im wesentlichen senkrecht nach unten.

In Fig.3 läßt sich ferner erkennen, daß bei dem gewählten Ausführungsbeispiel die Schüttgutaktivierungszähne 18 bevorzugt an dem gegen den Haldenfuß 1b bzw. den Haldenboden 1c weisenden unteren Rand 6a des Kratzrechens 6 angebracht sind. Es sei dabei angenommen, daß der Kratzrechen 6 rahmenartig aufgebaut und sein unterer Rand durch einen unteren Rahmenbalken 6a gebildet ist. Die Schüttgut-Aktivierungszähne 18 sind daher - wie in Fig.3 veranschaulicht - an diesem unteren Rahmenbalken 6a des Kratzrahmens 6 angebracht. Die Aktivierungszähne 18 könnten dabei vollkommen fest an diesem unteren Rahmenbalken 6a angebracht sein; vorzugsweise sind sie jedoch auswechselbar angebracht, z.B. - wie veranschaulicht - durch eine schraubbare Flanschverbindung 19.

Anstelle der Befestigung am unteren Rand des Kratzrechens 6 könnte jeder Aktivierungszahn 18 auch direkt von der Unterseite des Fahrgestelles 8 getragen werden, was durchaus ohne gesonderte zeichnerische Darstellung vorstellbar ist.

In jedem Falle werden die Schüttgut-Aktivierungszähne 18 in diesem veranschaulichten Ausführungsbeispiel gemeinsam mit dem Kratzrechen 6 vom Fahrgestell 8 entlang der Brücke 4 in Richtung des Doppelpfeiles 9 verfahren und somit durch das im Bereich des Haldenfußes 1b befindliche Schüttgut 2 bewegt werden. Bei der Anbringung der Aktivierungszähne 18 am unteren Rahmenbalken 6a des Kratzrechens 6 werden diese Aktvierungszähne 18 dann zusätzlich noch mit der Schwenkbewegung des Kratzrechens 6 in Richtung des Doppelpfeiles 11 durch das Schüttgut 2 am Haldenfuß 1b bewegt. Darüberhinaus kann die Bewegung jedes Aktivierungszahnes 18 auch in jeder anderen geeigneten Weise erfolgen, beispielsweise durch eigene Heb-, Senk-, Dreh-, Schwenk- oder sonstige Bewegungen, die durch zusätzliche Antriebsmittel herbeigeführt werden können.

Die Schüttgut-Aktivierungszähne 18 können ferner - wie aus diesem Beispiel der Fig.1 bis 3 ersichtlich - mit geeigneten Abständen voneinander sowie in einer einzigen, parallel zur Verfahrrichtung (Doppelpfeil 9 bzw. senkrecht zur Zeichenebene der Fig.2 und 3) der Kratzeinrichtung bzw. des Kratzrechens 6 liegenden Reihe angeordnet sein. Es besteht auch die Möglichkeit, diese Schüttgut-Aktivierungszähne in Verfahrrichtung der Kratzeinrichtung mit Abständen sowie auf Lücke zueinander anzuordnen, was ohne zusätzliche zeichnerischen Darstellung ohne weiteres vorstellbar sein dürfte (insbesondere auch bei Betrachtung der Darstellung in Fig.4).

Aus den bisherigen Erläuterungen läßt sich außerdem entnehmen, daß die Anzahl der im Bereich vor der Abfördereinrichtung, also vor dem Kratzerförderer 13 vorzusehenden Schüttgut-Aktivierungszähne vor allem von der Arbeitsbreite der verwendeten Kratzeinrichtung sowie außerdem auch noch von der Art des eingelagerten Schüttgutes abhängig gemacht wird. Bei einer Kratzeinrichtung mit extrem schmaler Arbeitsbreite, also beispielsweise in Form eines Abräumbalkens oder dgl., kann daher evtl. bereits ein einziger Schüttgut-Aktivierungszahn der erläuterten Ausführung ausreichend sein. In diesem Falle wird es jedoch zweckmäßig und zu bevorzugen sein, den Aktivierungszahn gesondert von der Kratzeinrichtung an der Brücke 4 zu haltern, wobei dieser eine Aktivierungszahn dann jeweils in Bewegungsrichtung entlang der Brücke 4 vor der Kratzeinrichtung zweckmäßig an einem eigenen Fahrgestell hängend entlang dieser Brücke verfahren werden kann. Ein solches eigenes Fahrgestell kann z.B. eine vereinfachte und verkleinerte Form des am Beispiel der Fig.1 bis 3 erläuterten Fahrgestelles 8 für die Kratzeinrichtung 6 sein. Dieser einzelne Schüttgut-Aktivierungszahn kann dabei jedoch in jeder der zuvor erläuterten Ausführungsarten ausgebildet sein.

Für die Ausbildung jedes Schüttgut-Aktivierungszahnes bestehen außerdem noch die in Fig.4 angedeuteten Möglichkeiten. Während im Beispiel der Fig.1 bis 3 jeder Schüttgut-Aktivierungszahn 18 im wesentlichen senkrecht nach unten hängend angebracht ist, kann jeder Aktivierungszahn 18' bzw. 18'' nach den Beispielen in Fig.4 auch unter einer Neigung zur Senkrechten nach unten ragen und dabei im Bedarfsfalle bzw. vorzugsweise ebenfalls in seiner Neigung gegenüber der Senkrechten einstellbar sein.

Betrachtet man zu dein Zuvorgesagten die beispielshaften Darstellungen in Fig.4, so ist die Neigung des in ausgezogenen Linien dargestellten - linken - Schüttgut-Aktivierungszahnes 18' gegenüber der Senkrechten so gewählt, daß der Aktivierungszahn 18' von den Kratzerschaufeln 15 wegweist, während der strichpunktiert dargestellte - rechte - Aktivierungszahn 18'' gegen die Kratzerschaufeln 15 geneigt ist. Durch diese verschiedenen Neigungseinstellungen bzw. -ausbildungen erhalten die Aktivierungszähne 18' bzw. 18'' unterschiedliche Abstände zu den Kratzerschaufeln 15 des Kratzerförderers 13. Diese Abstände können in Abhängigkeit von der jeweils zu erwartenden Stückgröße des Schüttgutes 2 gewählt werden, d.h. bei zu erwartenden großen Steinen bzw. Steinbrocken wird ein größerer Abstand der Aktivierungszähne von den Kratzerschaufeln 15 und bei zu erwartenden kleineren Steinbrocken ein entsprechend kleinerer Abstand zu den Kratzerschaufeln 15 gewählt werden, während bei zu erwartenden mittelgroßen Steinen und Steinbrocken die in Fig.3 veranschaulichte senkrechte Anordnung vorzuziehen ist; es ist aber auch eine sinnvolle Kombination dieser Anordnungs- bzw. Einstellungsarten der Aktivierungszähne entlang der Brücke möglich.

Im Hinblick auf die Darstellung in Fig.2 sei noch ergänzt, daß die beschriebene Abräumvorrichtung nicht nur auf einer Seite der Brücke 4 mit einer Kratzeinrichtng (Kratzrechen 6) ausgestattet sein kann, sondern daß auch auf der gegenüberliegenden Seite der Brücke 4 eine gleichartige Kratzeinrichtung vom Fahrgestell 8 getragen werden kann, wie es bei 6' strichpunktiert angedeutet ist, wobei dann die Abfördereinrichtung (Kratzerförderer 13) einer solchen Ausführung angepaßt ist und dementsprechend auch im Bereich vor der anderen Längsseite des Kratzerförderers Schüttgut-Aktivierungszähne 18 in der geschilderten Weise angeordnet sein können.

**Patentansprüche**

1. Vorrichtung zum Abräumen und Abfördern des Schüttgutes von einer Schüttguthalde, enthaltend

    a) eine gegen die eine Böschungsseite (1a) der Schüttguthalde (1) relativ verfahrbare Brücke (4),

    b) wenigstens eine entlang der Brücke (4) verfahrbare, auslegerartige Kratzeinrichtung (6), die mit der genannten Böschungsseite (1a) in Kratzeingriff bringbar ist,

    c ) eine von der Brücke (4) in der Nähe des Haldenbodens (1c) getragene Einrichtung (13) zum Abfördern des durch die Kratzeinrichtung (6) von der Böschungsseite (1a) abgekratzten und zugeführten Schüttgutes, dadurch gekennzeichnet, daß

    d) im Bereich vor der Abfördereinrichtung (13) wenigstens ein von der Brücke (4) gehalterter, bewegbarer Schüttgut-Aktivierungszahn (18, 18', 18'') vorgesehen ist.

2. Vorrichtung nach Anspruch 1, dadurch gekennzeichnet, daß jeder Schüttgut-Aktivierungszahn (18, 18', 18'') in Form eines Reißzahnes mit rundem oder polygonalem Querschnitt ausgebildet und frei nach unten hängend angeordnet ist, wobei sein freies unteres Ende (18a) in den Fußbereich (1b) der Schüttguthalde (1) hineinragt und einen nur geringen lichten Abstand (a) zum Haldenboden (1c) aufweist.

3. Vorrichtung nach Anspruch 2, dadurch gekennzeichnet, daß jeder Schüttgut-Aktivierungszahn (18, 18', 18'') auswechselbar angebracht ist.

4. Vorrichtung nach Anspruch 2, dadurch gekennzeichnet, daß der Aktivierungszahn (18) im wesentlichen senkrecht nach unten ragt.

5. Vorrichtung nach Anspruch 2, dadurch gekennzeichnet, daß der Aktivierungszahn unter einer Neigung zur Senkrechten (S) nach unten ragt und vorzugsweise in dieser Neigung einstellbar ist.

6. Vorrichtung nach Anspruch 2, dadurch gekennzeichnet, daß bei Verwendung nur eines Schüttgut-Aktivierungszahnes dieser Aktivierungszahn gesondert von der Kratzeinrichtung entlang der Brücke und jeweils in Bewegungsrichtung vor der Kratzeinrichtung verfahrbar ist.

7. Vorrichtung nach Anspruch 2, dadurch gekennzeichnet, daß bei Verwendung mehrerer Schüttgut-Aktivierungszähne (18) diese Aktivierungszähne an einem von der Brücke (4) getragenen Fahrgestell (8) für die Kratzeinrichtung (6) oder an dem gegen den Haldenboden (1c) weisenden unteren Rand (6a) dieser Kratzeinrichtung angebracht sind.

8. Vorrichtung nach Anspruch 7, dadurch gekennzeichnet, daß die Schüttgut-Aktivierungszähne (18) mit Abstand voneinander sowie in einer parallel zur Verfahrrichtung (9) der Kratzeinrichtung (6) liegenden Reihe angeordnet sind.

9. Vorrichtung nach Anspruch 7, dadurch gekennzeichnet, daß die Schüttgut-Aktivierungszähne in Verfahrrichtung der Kratzeinrichtung (6) mit Abständen sowie auf Lücke zueinander angeordnet sind.

10. Vorrichtung nach Anspruch 7, wobei die Kratzeinrichtung in Form eines Kratzrechens (6) ausgeführt ist, der in seiner Neigung gegenüber der abzukratzenden Böschungsseite (1a) einstellbar am Brücken-Fahrgestell (8) gehaltert und dessen unterer Rand durch einen Rahmenbalken (6a) gebildet ist, dadurch gekennzeichnet, daß die Schüttgut-Aktivierungszähne (18, 18', 18'') an dem unteren Rahmenbalken (6a) des Kratzrechens (6) angebracht sind.

FIG.1

EP 0 512 478 A1

FIG.2

FIG. 3

FIG. 4

| | EINSCHLÄGIGE DOKUMENTE | | EP 92107578.4 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| X | AT - B - 339 816 (SABES)<br>* Seite 2, Zeilen 20,25; Seite 6, Zeilen 47-50 * | 1 | B 65 G 65/28 |
| A | -- | 6,10 | |
| A | DE - A - 3 900 758 (KRUPP)<br>* Fig. 1 *<br>---- | 1,10 | |

|  |
|---|
| RECHERCHIERTE SACHGEBIETE (Int. Cl⁵) |
| B 65 G |

Der vorliegende Recherchenbericht wurde für alle Patentansprüche erstellt.

| Recherchenort | Abschlußdatum der Recherche | Prüfer |
|---|---|---|
| WIEN | 07-07-1992 | BAUMGARTNER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82